# EUROPÄISCHE PATENTSCHRIFT

(11) **EP 4 223 916 B1**
(45) Veröffentlichungstag und Bekanntmachung des Hinweises auf die Patenterteilung: **11.06.2025**
(21) Anmeldenummer: 22213472.8
(22) Anmeldetag: 14.12.2022
(51) Int. Cl.: D01G 15/14, B65H 27/00, D01G 25/00, F16C 13/00

(54) **WALZE SOWIE VLIESLEGER UND KREMPEL MIT EINER SOLCHEN WALZE**
ROLLER AND CROSSLAPPER AND CARD WITH SUCH A ROLLER
ROULEAU ET ÉTALEUR-NAPPEUR ET CARDEUSE AVEC UN TEL ROULEAU

(30) Priorität: 07.02.2022 EP 22155418
(43) Veröffentlichungstag der Anmeldung: 09.08.2023
(73) Patentinhaber: Oskar Dilo Maschinenfabrik KG, 69412 Eberbach (DE)
(72) Erfinder: DILO, Johann Philipp, Eberbach (DE)
(74) Vertreter: Wächter, Jochen

(56) Entgegenhaltungen:
- EP-A1- 0 736 369
- EP-A1- 0 894 876
- EP-A2- 1 927 771
- DE-A1- 102004 035 770
- JP-B1- 6 944 142
- US-A- 5 836 500

## Beschreibung

Die vorliegende Erfindung betrifft eine Walze sowie einen Vliesleger und eine Krempel mit einer solchen Walze.

Walzen werden in einer Vielzahl von Maschinen und Anlagen zur Bearbeitung von Materialien oder Führung von Transportmitteln, wie z.B. Förderbändern, eingesetzt und sind dabei in aller Regel hohen Anforderungen ausgesetzt. Walzen, die beispielsweise bei der Vliesherstellung in Vlieslegern oder in Krempeln verwendet werden, müssen zum einen biegesteif ausgebildet sein, sollten aber geringe Drehmassen aufweisen. Derartige Walzen z.B. aus Aluminium sind verhältnismäßig leicht, weisen jedoch einen geringen Elastizitätsmodul auf. Werden die Walzen wiederum aus Stahl gebildet, weisen sie zwar einen hohen Elastizitätsmodul auf, dies jedoch in Verbindung mit einer hohen Masse. Es ist auch bekannt, den Walzenkörper der Walzen aus kohlenstofffaserverstärktem Kunststoff zu bilden, wobei solche Walzen verhältnismäßig leicht und biegesteif sind, gegenüber den herkömmlichen Lösungen jedoch sehr hohe Anschaffungskosten verursachen.

EP 0 736 369 A1 offenbart eine Walze mit einem Grundkörper aus einem Faserverbundwerkstoff und einer Beschichtung, die sich um die Enden des Grundkörpers auf die Innenseite desselben erstreckt.

EP 1 927 771 A2 offenbart eine Lagerrolle zum Bewegen von schweren Lasten an einer Schiene. Die Lagerrolle umfasst einen hülsenförmigen Grundkörper, auf dessen Außenseite vollständig und an dessen Innenseite teilweise eine Harzschicht mittels Insert-Molding aufgebracht ist.

Es ist eine Aufgabe der vorliegenden Erfindung eine Walze, sowie einen Vliesleger und eine Krempel mit einer solchen Walze bereitzustellen, die die genannten Nachteile des Stands der Technik überwinden.

Diese Aufgabe wird durch den Gegenstand der Ansprüche 1, 9 bzw. 10 gelöst. Vorteilhafte Ausführungsformen sind Gegenstand der abhängigen Ansprüche.

Eine erfindungsgemäße Walze, insbesondere zur Förderung und/oder Bearbeitung von Faserbahnen, Vorfloren, Floren, Vliesen oder Vliesstoffen, insbesondere zum Einsatz in einem Vliesleger oder einer Krempel, umfasst einen im Wesentlichen zylindrischen Walzengrundkörper und eine Deckschicht aus einem Faserverbundwerkstoff. Der Walzengrundkörper weist eine äußere erste Mantelfläche, einen ersten Endabschnitt und einen zweiten Endabschnitt auf, der dem ersten Endabschnitt in Längsrichtung des Walzengrundkörpers, die der axialen Richtung des Walzengrundkörpers entspricht, gegenüberliegt. Die Deckschicht umgibt die erste Mantelfläche des Walzengrundkörpers in Umfangsrichtung des Walzengrundkörpers vollständig. Ein erster Randbereich der Deckschicht erstreckt sich über den ersten Endabschnitt des Walzengrundkörpers hinaus, ist nach innen umgelegt und bezüglich des Walzengrundkörpers festgelegt.

Auf diese Art und Weise wird eine Walze bereitgestellt, die aufgrund der Deckschicht aus Faserverbundwerkstoff eine hohe Biegesteifigkeit sowie eine geringe Masse aufweist. Durch den Walzengrundkörper kann der Anteil an Faserverbundwerkstoff jedoch reduziert werden, sodass die Walze verhältnismäßig kostengünstig hergestellt werden kann. Die Deckschicht aus Faserverbundwerkstoff weist bei geringer Masse einen großen Elastizitätsmodul auf. Der Walzengrundkörper kann aus einem günstigeren Werkstoff, wie zum Beispiel Aluminium oder Stahl, gebildet sein, sodass die Kosten gegenüber einer Walze, deren Walzenkörper vollständig aus Faserverbundwerkstoff besteht, reduziert sind.

Zwischen dem Herstellungsort und dem Verwendungsort sowie während dem Transport der Walze, kann die Walze starken Temperaturschwankungen ausgesetzt sein, beispielsweise von bis zu 30 Kelvin. Aufgrund der deutlich unterschiedlichen Temperaturkoeffizienten der Werkstoffe besteht das Risiko, dass derartige Temperaturschwankungen zur Delamination der Deckschicht vom Walzengrundkörper führen. Dies wird vorliegend verhindert, dass der erste Randbereich der Deckschicht nach innen umgelegt und dort bezüglich des Walzengrundkörpers festgelegt ist. Die Deckschicht aus Faserverbundwerkstoff weist einen geringeren Temperaturkoeffizienten auf als der Walzengrundkörper und behindert durch ihre Anordnung um den Walzengrundkörper herum sowie um dessen Endabschnitt eine Ausdehnung desselben sowohl in radialer auch als in axialer Richtung.

Die Deckschicht bedeckt die erste Mantelfläche zumindest teilweise und vorzugsweise vollständig. In einer besonders bevorzugten Ausführungsform erstreckt sich ein zweiter Randbereich der Deckschicht über den zweiten Endabschnitt des Walzengrundkörpers hinaus, ist nach innen umgelegt und bezüglich des Walzengrundkörpers festgelegt. Die Deckschicht ist dadurch symmetrisch am Walzengrundkörper festgelegt und besonders zuverlässig mit diesem verbunden.

Vorzugsweise ist die Walze, insbesondere bezüglich des Walzengrundkörpers und der Deckschicht, sowohl rotationssymmetrisch zu einer Längsachse der Walze als auch symmetrisch zu einer Mittelebene der Walze bzw. des Walzengrundkörpers ausgebildet, wobei die Mittelebene senkrecht zur Längsachse zwischen den beiden gegenüberliegenden Enden des Walzengrundkörpers definiert ist.

Im Folgenden sind Merkmale der Walze unter Bezugnahme auf den ersten Endabschnitt des Walzengrundkörpers und den ersten Randbereich der Deckschicht beschrieben. Es ist dabei jeweils bevorzugt, dass der zweite Endabschnitt des Walzengrundkörpers und der zweite Randbereich der Deckschicht analog ausgebildet sind. Grundsätzlich könnten der erste und der zweite Endabschnitt bzw. der erste und der zweite Randbereich jedoch auch unterschiedlich ausgebildet sein.

Der Walzengrundkörper bildet vorzugsweise einen Wickelkern, um den die Deckschicht herumgelegt ist. Die Deckschicht kann ein Gelege oder ein Gewebe von Fasern, beispielsweise von Kohlenstofffasern, umfassen. Die Deckschicht kann einlagig oder mehrlagig ausgebildet sein.

Vorzugsweise verläuft ein erster Teil von Fasern des Faserverbundwerkstoffs der Deckschicht im Wesentlichen in Umfangsrichtung des Walzengrundkörpers und ein zweiter Teil von Fasern des Faserverbundwerkstoffs der Deckschicht verläuft im Wesentlichen in Längsrichtung des Walzengrundkörpers. Dadurch kann die Deckschicht einer Ausdehnung des Walzengrundkörpers sowohl in radialer Richtung als auch in Längsrichtung entgegengewirkt. Es versteht sich, dass der erste Teil von Fasern und der zweite Teil von Fasern dazu auch schräg bezüglich der Umfangsrichtung bzw. der Längsrichtung verlaufen können, wobei sich vorzugsweise der erste Teil von Fasern vollständig um den Umfang des Walzengrundkörpers herum erstreckt und sich der zweite Teil von Fasern vollständig vom ersten Randbereich zum zweiten Randbereich der Deckschicht erstreckt.

Im ersten Endabschnitt des Walzengrundkörpers liegt die Deckschicht an der ersten Mantelfläche des Walzengrundkörpers an. Der erste Randbereich der Deckschicht erstreckt sich über die erste Mantelfläche bzw. den ersten Endabschnitt hinaus und verläuft dann nach innen in Richtung der Längsachse des Walzengrundkörpers.

Vorzugsweise ist der Walzengrundkörper zumindest im ersten Endabschnitt des Walzengrundkörpers rohrförmig ausgebildet und der erste Randbereich der Deckschicht ist so weit um den ersten Endabschnitt umgelegt, dass er im Inneren des ersten Endabschnitts angeordnet ist. Analog kann der zweite Endabschnitt des Walzengrundkörpers rohrförmig ausgebildet sein und der zweite Randbereich der Deckschicht ist so weit um den ersten Endabschnitt umgelegt, dass er im Inneren des zweiten Endabschnitts angeordnet ist. Rohrförmig bedeutet, dass sich von der jeweiligen Stirnseite des Walzengrundkörpers aus eine im Wesentlichen rotationssymmetrische Ausnehmung in Längsrichtung in den Walzengrundkörper erstreckt.

In einer besonders bevorzugten Ausführungsform ist der Walzengrundkörper als Hohlwelle ausgebildet, wodurch die Masse des Walzengrundkörpers weiter reduziert werden kann. Um die Kosten dabei weiterhin gering zu halten, sind der erste und der zweite Randbereich weiterhin im ersten bzw. zweiten Endabschnitt des Walzengrundkörpers angeordnet und festgelegt. Der erste und der zweite Randbereich sind an einen ersten bzw. zweiten umlaufenden Rand der Deckschicht definiert. Das heißt, dass die Deckschicht an diesen Rändern endet und sich nicht innen durch den Walzengrundkörper hindurch erstreckt bzw. die Fasern nicht auch in Längsrichtung um den Walzengrundkörper gewickelt sind.

Um eine sichere Verbindung zum Walzengrundkörper herzustellen, ist der erste Randbereich bevorzugt adhäsiv und reibschlüssig festgelegt. Auch der zweite Randbereich ist bevorzugt adhäsiv und reibschlüssig festgelegt. Eine reibschlüssige Verbindung wird gemäß der Erfindung mittels eines Klemmelements erzeugt, die weiter unten im Detail beschrieben ist.

Eine adhäsive Verbindung kann durch ein Klebemittel oder ein zum Laminieren des Faserverbundwerkstoffs der Deckschicht verwendetes Harz erfolgen. Die Haftung am Walzengrundkörper kann dadurch erhöht werden, dass die erste Mantelfläche des Walzengrundkörpers zumindest abschnittsweise und vorzugsweise vollständig aufgeraut oder strukturiert ist, beispielsweise sandgestrahlt ist.

Erfindungsgemäß können der erste Randbereich und vorzugsweise auch der zweite Randbereich gemäß einer ersten Alternative um den Walzengrundkörper selbst umgelegt und an diesem festgelegt sein oder gemäß einer zweiten Alternative um eine weitere Komponente der Walze umgelegt und an dieser festgelegt sein, wie nachfolgend beschrieben.

In der ersten Alternative weist der Walzengrundkörper im ersten Endabschnitt, vorzugsweise auch im zweiten Endabschnitt, stirnseitig eine Krümmung auf, um die der erste Randbereich bzw. der zweite Randbereich der Deckschicht nach innen umgelegt ist. Die Krümmung definiert einen Biegeradius der Deckschicht, um den die Deckschicht umgelegt ist, wodurch hohe Scherspannungen in der Deckschicht vermieden und die Fasern des Faserverbundwerkstoffs geschont werden. Zugleich weist die Walze einen möglichst einfachen Aufbau mit wenigen Komponenten auf.

Die Krümmung verläuft von der ersten Mantelfläche aus zunächst nach innen in Richtung der Längsachse des Walzengrundkörpers. Vorzugsweise verläuft die Krümmung bis zu einem Befestigungsabschnitt des Walzengrundkörpers für den jeweiligen Randbereich der Deckschicht. Der Befestigungsabschnitt ist in einem axialen Querschnitt vorzugsweise gerade ausgebildet und bezüglich der Längsachse des Walzengrundkörpers geneigt, bevorzugt in einem Winkel zwischen 2,5° und 60°, mehr bevorzugt zwischen 5° bis 30°.

Die Deckschicht wird in dieser Ausführungsform vollständig vom Walzengrundkörper getragen. Mit anderen Worten erstreckt sich der Walzengrundkörper in Längsrichtung entlang der gesamten Deckschicht mit Ausnahme des ersten und des zweiten Randbereichs der Deckschicht, die um den ersten und den zweiten Endabschnitt des Walzengrundkörpers umgelegt sind.

In der zweiten Alternative umfasst die Walze weiterhin einen ersten Endring und bevorzugt einen zweiten Endring, die koaxial zum Walzengrundkörper angeordnet sind und am ersten bzw. zweiten Endabschnitt an den Walzengrundkörper angrenzen. Der erste und der zweite Endring sind bündig zur ersten Mantelfläche und weisen auf einer vom Walzengrundkörper abgewandten Seite eine Krümmung auf, um die der erste bzw. zweite Randbereich der Deckschicht nach innen umgelegt ist. Die Krümmung definiert einen Biegeradius der Deckschicht, um den die Deckschicht umgelegt ist, wodurch hohe Scherspannungen in der Deckschicht vermieden und die Fasern des Faserverbundwerkstoffs geschont werden. Dadurch kann die Krümmung und somit der Biegeradius der Deckschicht unabhängig von der Wandstärke des Walzengrundkörpers gestaltet werden, was wiederum eine Minimierung der Wandstärke des Walzengrundkörpers ermöglicht. Der erste und der zweite Endring schließen unmittelbar an die freie Stirnseite des ersten bzw. zweiten Endabschnitts an. In dem Bereich, in dem der erste und der zweite Endring bündig an den Walzengrundkörper angrenzen, weisen sie einen Außendurchmesser auf, der dem Außendurchmesser des Walzengrundkörpers bzw. der ersten Mantelfläche entspricht.

Die Krümmung verläuft von der an die erste Mantelfläche angrenzenden Außenseite des Endrings aus zunächst nach innen in Richtung der Längsachse des Walzengrundkörpers. Vorzugsweise verläuft die Krümmung bis zu einem Befestigungsabschnitt des jeweiligen Endrings für den entsprechenden Randbereich. Der Befestigungsabschnitt ist in einem axialen Querschnitt vorzugsweise gerade ausgebildet und bezüglich der Längsachse des Walzengrundkörpers geneigt, bevorzugt in einem Winkel zwischen 2,5° und 60°, mehr bevorzugt zwischen 5° bis 30°.

Die Deckschicht wird in dieser Ausführungsform vom Walzengrundkörper sowie dem ersten und dem zweiten Endring getragen. Mit anderen Worten erstrecken sich der Walzengrundkörper, der erste Endring und der zweite Endring in Längsrichtung entlang der gesamten Deckschicht mit Ausnahme des ersten und des zweiten Randbereichs der Deckschicht, die um den ersten und den zweiten Endring umgelegt sind.

Der erste und der zweite Endring können aus Aluminium gebildet sein und, unabhängig davon, insbesondere im Befestigungsabschnitt eine Oberfläche aufweisen, die aufgeraut oder strukturiert ist, um die Haftung der Deckschicht zu verbessern.

Bevorzugt sind der erste und der zweite Endabschnitt des Walzengrundkörpers rohrförmig ausgebildet und weisen einen Innendurchmesser auf. Der erste und der zweite Endring können jeweils einen ersten Abschnitt aufweisen, der in den ersten bzw. zweiten Endabschnitt eingesetzt ist und dessen Außendurchmesser im Wesentlichen dem Innendurchmesser der Endabschnitte entspricht. An der Stirnseite des Walzengrundkörpers erstrecken sich der erste und der zweite Endring von dem ersten Abschnitt radial nach außen zu einem Mantelabschnitt, der bündig zur ersten Mantelfläche des Walzengrundkörpers angeordnet ist und die Außenseite des Endrings bildet. Vom Mantelabschnitt erstreckt sich die Krümmung bis zum Befestigungsabschnitt des jeweiligen Endrings, der bevorzugt zumindest teilweise oder vollständig im Inneren des Walzengrundkörpers angeordnet ist.

Um den ersten Randbereich reibschlüssig festzulegen, umfasst die Walze erfindungsgemäß zumindest ein erstes Klemmelement. Bevorzugt umfasst die Walze ferner ein zweites Klemmelement. Das erste und das zweite Klemmelement drücken den ersten bzw. zweiten Randbereich der Deckschicht vorzugsweise gegen den Befestigungsabschnitt des Walzengrundkörpers oder des ersten bzw. zweiten Endrings, wodurch die Deckschicht festgelegt wird.

In der oben beschriebenen ersten Alternative weisen das erste Klemmelement und der erste Endabschnitt des Walzengrundkörpers korrespondierende konische Anlageflächen auf, zwischen denen der erste Randbereich aufgenommen ist. Analog können das zweite Klemmelement und der zweite Endabschnitt des Walzengrundkörpers korrespondierende konische Anlageflächen aufweisen, zwischen denen der zweite Randbereich aufgenommen ist. Die konischen Anlageflächen des Walzengrundkörpers im ersten bzw. zweiten Endabschnitt sind vorzugsweise durch die Befestigungsabschnitte des Walzengrundkörpers gebildet.

In der oben beschriebenen zweiten Alternative weisen das erste Klemmelement und der erste Endring korrespondierende konische Anlageflächen auf, zwischen denen der erste Randbereich aufgenommen ist. Analog können das zweite Klemmelement und der zweite Endring korrespondierende konische Anlageflächen aufweisen, zwischen denen der zweite Randbereich aufgenommen ist. Die konischen Anlageflächen des ersten bzw. zweiten Endrings sind vorzugsweise durch den Befestigungsabschnitt des jeweiligen Endrings gebildet.

Der erste und der zweite Randbereich können unmittelbar an den jeweiligen Anlageflächen anliegen, um eine direkte Kraftübertragung zu ermöglichen. Durch die konische Form können hohe Normalkräfte auf den ersten und den zweiten Randbereich übertragen werden, ohne dass signifikante Scherspannungen auf die Fasern des Faserverbundwerkstoffs wirken.

In einer bevorzugten Ausführungsform ist das erste Klemmelement in Längsrichtung der Walze derart verstellbar, dass ein mittels des ersten Klemmelements auf den ersten Randbereich der Deckschicht wirkender Anpressdruck einstellbar ist. Dies gilt vorzugsweise auch für das zweite Klemmelement. Zum Beispiel können das erste und das zweite Klemmelement mit einer weiteren Komponente der Walze, beispielsweise einem Walzenboden, verschraubt sein, sodass mittels der Verschraubung der Anpressdruck veränderbar ist.

Das erste und das zweite Klemmelement sind beispielsweise ring- oder scheibenförmig ausgebildet und koaxial zum Walzengrundkörper angeordnet, insbesondere an dessen erstem und zweitem Endabschnitt. Bei rohrförmiger Ausbildung des ersten und des zweiten Endabschnitts und/oder Verwendung des ersten und zweiten Endrings sind das erste und das zweite Klemmelement bevorzugt radial innerhalb des Walzengrundkörpers bzw. des ersten und des zweiten Endrings angeordnet.

Im Allgemeinen kann die Walze einen ersten Walzenboden und einen zweiten Walzenboden aufweisen. Die Walzenböden sind im Wesentlichen ring- oder scheibenförmig und können integral mit dem Walzengrundkörper oder als separate Elemente ausgebildet sein.

Die Walze kann ferner einen ersten und einen zweiten Wellenzapfen umfassen, die dazu eingerichtet sind, die Walze drehend zu lagern. Hierzu sind der erste und der zweite Wellenzapfen koaxial zum Walzengrundkörper angeordnet. Der erste und der zweite Wellenzapfen können wiederum integral mit dem ersten bzw. zweiten Walzenboden oder als separate Elemente ausgebildet sein.

Bei integraler Ausbildung des ersten und des zweiten Wellenzapfens mit dem ersten bzw. zweiten Walzenboden sind der erste und der zweite Walzenboden vorzugsweise getrennt vom Walzengrundkörper ausgebildet und bezüglich desselben zentriert. Beispielsweise ist der Walzengrundkörper als Hohlwelle und im ersten und zweiten Endabschnitt jeweils konisch ausgebildet, wobei der erste und der zweite Walzenboden eine korrespondierende konische Form aufweisen.

Sind der erste und der zweite Wellenzapfen als separate Elemente ausgebildet, weisen der erste und der zweite Walzenboden jeweils in Längsrichtung des Walzengrundkörpers eine Durchgangsöffnung auf, in der der erste bzw. der zweite Wellenzapfen gelagert ist. Um den ersten und den zweiten Wellenzapfen relativ zum Walzengrundkörper zu zentrieren, ist die Durchgangsöffnung im ersten und im zweiten Walzenboden vorzugsweise konisch geformt und der erste und der zweite Wellenzapfen weisen jeweils ein konisch geformtes Ende auf, das in der Durchgangsöffnung des jeweiligen Walzenbodens aufgenommen ist. Der erste und der zweite Walzenboden sind in dieser Ausführungsform bevorzugt im Wesentlichen zylindrisch ausgebildet und im ersten bzw. zweiten Endabschnitt des Walzengrundkörpers aufgenommen, beispielsweise in diese eingepresst.

Es ist denkbar, dass der erste und der zweite Walzenboden zugleich das erste bzw. zweite Klemmelement bilden und die Deckschicht bezüglich des Walzengrundkörpers festlegen. Bevorzugt sind das erste und das zweite Klemmelement jedoch separat ausgebildet und mit dem ersten bzw. zweiten Walzenboden verschraubt, wobei die Schrauben über den Umfang des ersten und des zweiten Klemmelements verteilt sind, um einen gleichmäßigen Anpressdruck auf den ersten und den zweiten Randbereich der Deckschicht zu bewirken. Das erste und das zweite Klemmelement können jeweils zentral eine Durchgangsöffnung aufweisen, durch die sich der erste bzw. zweite Wellenzapfen erstreckt.

Grundsätzlich ist es bevorzugt, dass der erste Walzenboden im ersten Endabschnitt des Walzengrundkörpers aufgenommen ist, der zweite Walzenboden im zweiten Endabschnitt des Walzengrundkörpers aufgenommen ist und der erste und der zweite Walzenboden in Längsrichtung des Walzengrundkörpers mittels einer Spanneinrichtung miteinander verspannt sind. Die axiale Verspannung trägt vorteilhaft zur Minimierung der thermischen Ausdehnung des Walzengrundkörpers bei und reduziert dadurch das Risiko der Delamination der Deckschicht vom Walzengrundkörper.

Die Spanneinrichtung kann beispielsweise einen Stab umfassen, der koaxial zum Walzengrundkörper angeordnet ist und sich von einem Ende der Walze zum anderen Ende der Walze durch die Wellenzapfen, die Walzenböden und den Walzengrundkörper hindurch erstreckt. Zumindest an einem Ende des Stabs, vorzugsweise an beiden Enden, ist ein Gewindeabschnitt mit einer Mutter vorgesehen, mittels derer bei gekontertem anderen Ende des Stabs die Spannung einstellbar ist. Der Stab kann zum Beispiel aus Stahl sein.

In einer alternativen Ausführungsform umfasst die Spanneinrichtung Kohlenstofffaser-Filamente, die vorzugsweise mittels Schlaufeneinhängung an den Walzenböden oder Wellenzapfen angebracht sind.

Um den ersten und den zweiten Randbereich der Deckschicht zuverlässig festzulegen und nicht zu beschädigen, sollten diese faltenfrei und ohne Überlappungen nach innen umgelegt und vorzugsweise geklemmt sein. Hierzu ist es vorteilhaft, wenn der erste Randbereich und der zweite Randbereich jeweils eine Mehrzahl von Einschnitten aufweisen, die in Umfangsrichtung verteilt sind. Jeder Einschnitt der Mehrzahl von Einschnitten ist von einem in Umfangsrichtung verlaufenden Rand der Deckschicht ausgehend derart ausgebildet, dass der erste bzw. der zweite Randbereich faltenfrei ausgebildet ist und sich zwei Teilabschnitte des ersten bzw. zweiten Randbereichs, die durch einen Einschnitt der Mehrzahl von Einschnitten voneinander getrennt sind, nicht überlappen. Dies kann beispielsweise dadurch erreicht werden, dass jeder Einschnitt der Mehrzahl von Einschnitten vom jeweiligen Rand ausgehend sich verjüngend geformt ist, beispielsweise im Wesentlichen dreieckig.

Die Walze weist eine äußere zweite Mantelfläche auf, die zumindest teilweise durch die Deckschicht gebildet ist. Die zweite Mantelfläche kann als Nutzfläche der Walze verstanden werden. Bildet die Walze beispielsweise eine Umlenkwalze in einem Vliesleger, bildet die zweite Mantelfläche die Kontaktfläche zum umgelenkten Förderband. Wird die Walze in einer Krempel verwendet, kann eine Garnitur von Zähnen auf der zweiten Mantelfläche vorgesehen sein.

Vorzugsweise erstreckt sich die Deckschicht in Längsrichtung der Walze über mindestens 50 %, mehr bevorzugt über mindestens 70 %, noch mehr bevorzugt über mindestens 80 % der zweiten Mantelfläche. Die Deckschicht kann die zweite Mantelfläche auch vollständig bilden, sich also in Längsrichtung über 100 % der zweiten Mantelfläche erstrecken. Letzteres ist beispielsweise bei Umlenkwalzen denkbar. Im Fall von Walzen einer Krempel ist vorzugsweise an beiden axialen Enden der zweiten Mantelfläche ein Bereich vorgesehen, der nicht durch die Deckschicht gebildet ist und der Befestigung eines Drahts dient, der die Garnitur bildet. Diese Endbereiche der zweiten Mantelfläche können durch das erste und das zweite Klemmelement oder den ersten und den zweiten Walzenboden gebildet sein.

Der Walzengrundkörper ist vorzugsweise aus Metall, insbesondere aus Aluminium oder Stahl, oder aus einem Kunststoff, insbesondere aus GFK (glasfaserverstärkter Kunststoff) oder Polyamid, gebildet. Gegenüber Walzen, die vollständig aus einem Faserverbundwerkstoff gebildet sind, ergibt sich dadurch eine Kostenreduktion bei dennoch ausreichender Biegesteifigkeit.

Der Walzengrundkörper weist bevorzugt eine Wandstärke auf, die zwischen 1 mm und 50 mm, mehr bevorzugt zwischen 1 mm und 30 mm, noch mehr bevorzugt zwischen 1 mm und 10 mm beträgt. Durch Ausbildung des Walzengrundkörpers als Hohlwelle mit geringer Wandstärke weist die Walze eine geringe Masse auf.

Vorzugsweise umfasst die Deckschicht Kohlenstofffasern, Glasfasern oder Mineralfasern, wie Keramikfasern oder Silikatfasern, und eine Matrix aus Kunststoff, insbesondere aus Harzen aus Epoxy, Polyester, Polyurethan oder Melamin.

Die Deckschicht weist bevorzugt eine Schichtdicke auf, die zwischen 0,1 mm und 10 mm, mehr bevorzugt zwischen 0,5 mm und 8 mm, noch mehr bevorzugt zwischen 1 mm und 5 mm beträgt.

Das Verhältnis der Wandstärke des Walzengrundkörpers zur Schichtdicke der Deckschicht kann zur Einstellung der Eigenschaften der Walze auf einfache Art und Weise variiert werden.

Die Walze kann in Längsrichtung eine Länge aufweisen, die zwischen 1,0 m und 18,0 m, bevorzugt zwischen 2,0 m und 18,0 m, mehr bevorzugt zwischen 4,0 m und 18,0 m beträgt. Ein Außendurchmesser der Walze kann zwischen 50 mm und 800 mm, bevorzugt zwischen 80 mm und 400 mm, noch mehr bevorzugt zwischen 100 mm und 350 mm betragen. Bei diesen Dimensionen kommen die Vorteile der bereits geschilderten Vorteile der Erfindung hinsichtlich Kostenreduktion bei ausreichender Biegesteifigkeit unter Vermeidung der Delamination der Deckschicht vom Walzengrundkörper besonders deutlich zum Tragen.

Die Vorteile einer verhältnismäßig geringen Masse wirken sich insbesondere auch bei hohen Drehgeschwindigkeiten und/oder Beschleunigungen der Walze vorteilhaft aus. Vorzugsweise ist die Walze daher mit einer Umfangsgeschwindigkeit betreibbar, die zwischen 30 m/min und 6.000 m/min, mehr bevorzugt zwischen 100 m/min und 5.500 m/min, noch mehr bevorzugt zwischen 400 m/min und 5.000 m/min beträgt. Besonders hohe Umfangsgeschwindigkeiten von bis zu 3.500 m/min oder 5.000 m/min werden beispielsweise bei Wirrwalzen am Krempelausgang oder bei Abschlagswalzen in der aerodynamischen Vliesbildung erreicht.

Ein Vliesleger umfasst mindestens ein Förderband zum Fördern einer Faserflorbahn und eine Mehrzahl von Umlenkwalzen, um die das mindestens eine Förderband geführt ist, wobei mindestens eine Umlenkwalze der Mehrzahl von Umlenkwalzen durch eine erfindungsgemäße Walze gebildet ist. Wie eingangs beschrieben, ist es vor allem bei Vlieslegern wichtig, dass die Umlenkwalzen trotz hoher Belastung formstabil sind und aufgrund der hohen Beschleunigungen, denen sie ausgesetzt sein können, eine geringe Masse aufweisen. Dies kann durch die erfindungsgemäße Walze verhältnismäßig kostengünstig erreicht werden. Alle hierin bezüglich der erfindungsgemäßen Walze beschriebenen Merkmale können analog bei der Verwendung in einem Vliesleger zutreffen.

Im Vliesleger ist die Walze drehbar gelagert und hohen Geschwindigkeiten und Beschleunigungen ausgesetzt. Beispielsweise wird das mindestens eine Förderband mit einer Geschwindigkeit über die Walze bewegt, die zwischen 100 m/min und 1.000 m/min, bevorzugt zwischen 200 m/min und 900 m/min, noch mehr bevorzugt zwischen 400 m/min und 700 m/min beträgt.

In einer bevorzugten Ausführungsform umfasst der Vliesleger ein Zuführband, zumindest ein erstes Förderband und ein zweites Förderband, einen Oberwagen und einen Legewagen sowie ein Abzugsband. Das Zuführband ist dazu eingerichtet, dem Vliesleger eine von einer Krempel kommende Faserflorbahn zuzuführen und diese an das erste Förderband zu übergeben. Das erste Förderband fördert die Faserflorbahn zum Oberwagen, in dem die Faserflorbahn umgelenkt wird. Vom Oberwagen wird die Faserflorbahn dem zweiten Förderband übergeben. Das zweite Förderband fördert die Faserflorbahn zum Legewagen, wobei die Faserflorbahn zwischen Oberwagen und Legewagen vom ersten Förderband bedeckt sein kann. Der Legewagen ist dazu eingerichtet, senkrecht zur Förderrichtung des Abzugsbands hin und her zu fahren und dabei die Faserflorbahn auf das Abzugsband abzulegen. Das mindestens eine Förderband kann zumindest eines oder mehrere aus dem ersten Förderband, dem zweiten Förderband, ggf. vorgesehenen weiteren Förderbändern, dem Zuführband und dem Abzugsband umfassen.

Eine Krempel zum Erzeugen einer Faserflorbahn umfasst einen Tambour (auch Hauptwalze genannt) sowie eine Mehrzahl von Eingriffswalzen, wobei jede Eingriffswalze der Mehrzahl von Eingriffswalzen zum Eingriff mit Fasermaterial eingerichtet ist und dem Tambour zugeordnet, vorgelagert oder nachgelagert ist, wobei zumindest eine Eingriffswalze der Mehrzahl von Eingriffswalzen durch eine erfindungsgemäße Walze gebildet ist. Hierzu weist die Eingriffswalze eine Garnitur von Zähnen auf, die auf der zweiten Mantelfläche der Walze vorgesehen ist. Vorteilhaft kann die Garnitur gebildet werden durch einen Draht, der eine Vielzahl von Zähnen aufweist, um die zweite Mantelfläche der Walze gewickelt ist und in zumindest einem Endbereich, vorzugsweise in zwei Endbereichen der zweiten Mantelfläche mit dieser verbunden ist, beispielsweise angelötet ist.

Ist die Walze beispielsweise als Wirrwalze an einem Ausgang der Krempel ausgebildet, kann sie für Umfangsgeschwindigkeiten von bis zu 3.500 m/min ausgelegt sein.

Die vorliegende Erfindung betrifft weiterhin eine Nadelmaschine zum Verfestigen einer Faserflorbahn, die eine Nadelzone mit mindestens einem Nadelbalken mit einer Vielzahl von Nadeln umfasst, der dazu eingerichtet ist, die Faserflorbahn zu verfestigen. Ferner umfasst die Nadelmaschine eine Mehrzahl von Walzen zur Führung der zu verfestigenden oder verfestigten Vliesbahn, wie z.B. Zuführ- oder Abzugswalzen, wobei zumindest eine Walze der Mehrzahl von Walzen durch eine erfindungsgemäße Walze gebildet ist.

Die Mehrzahl von Walzen der Nadelmaschine wird in der Regel mit geringen Geschwindigkeiten betrieben. Aufgrund der großen Spannweite, die in der Nadelmaschine zu überbrücken ist, müssen Walzen bislang häufig zwischengelagert werden, um die Durchbiegung der Walzen zu minimieren bzw. zu eliminieren, wodurch die Komplexität der Maschine sowie deren Kosten zunehmen. Durch den Einsatz erfindungsgemäßer Walzen, die bei gleichen Dimensionen eine höhere Biegesteifigkeit als herkömmliche Walzen aufweisen können, in der Nadelmaschine kann auf eine Zwischenlagerung derselben verzichtet werden.

Die vorliegende Erfindung betrifft weiterhin ein aeorodynamisches Vliesbildungssystem, wobei mindestens eine Walze, insbesondere die Abschlagswalze, durch eine erfindungsgemäße Walze gebildet sein kann.

Die vorliegende Erfindung betrifft weiterhin ein Streckwerk umfassend eine Mehrzahl von Walzen zum Strecken der Faserflor- oder Vliesbahn, wobei zumindest eine Walze der Mehrzahl von Walzen durch eine erfindungsgemäße Walze gebildet ist. Das Streckwerk kann vor und/oder nach einem Vliesleger vorgesehen sein, ebenfalls nach einer Verfestigungseinrichtung wie einer Nadelmaschine.

Neben den bereits genannten Einsatzgebieten existieren noch viele weitere Anwendungen für die erfindungsgemäße Walze. Die meisten davon betreffen allgemein Maschinen, die Materialbahnen oder Materialstücke fördern und/oder bearbeiten. Besonders bevorzugt ist ihr Einsatz bei Maschinen, die bahnförmige Waren mit großer Dickenpräzision transportieren und/oder verarbeiten.

Ebenfalls besonders vorteilhaft ist der Einsatz der erfindungsgemäßen Walze dort, wo lange, schlanke Walzen eingesetzt werden und dabei hohe Anforderungen an große Steifigkeit (geringe Durchbiegungen) unter hohen Streckenlasten gestellt werden, also präzise Spaltmaße einzuhalten sind. Vor allem betrifft dies Walzen, die mit großen Geschwindigkeiten bzw. Drehzahlen laufen. Das relativ geringe Gewicht der erfindungsgemäßen Walze ist hierbei von besonderem Vorteil.

Konkrete weitere Beispiele für den Einsatz der erfindungsgemäßen Walze sind andere Textilmaschinen (z.B. Kalander) zum Kalibrieren, Laminieren, Pressen, Prägen, Mustern, Bügel; Kunststoffmaschinen für Folien, beispielsweise zum Laminieren und Prägen; Druckmaschinen und Beschichtungsmaschinen; Maschinen zur Lederherstellung und Lederveredelung; Maschinen zur Holzverarbeitung und Furnierherstellung; Walzwerke für Metalle und Papierpresswerke etc.

Weitere Merkmale und Vorteile der vorliegenden Erfindung ergeben sich aus der nachfolgenden Beschreibung unter Bezugnahme auf die beigefügten Zeichnungen.
- Fig. 1: zeigt eine Ausführungsform einer erfindungsgemäßen Walze in einer Querschnittsansicht.
- Fig. 2a, b: zeigen zwei Alternativen einer ersten Ausführungsform einer erfindungsgemäßen Walze in einer Detailansicht.
- Fig. 3a, b: zeigen zwei Alternativen einer zweiten Ausführungsform der Walze nach Fig. 1 in einer Detailansicht.
- Fig. 4: zeigt schematisch einen Randbereich einer Deckschicht einer erfindungsgemäßen Walze in einer perspektivischen Ansicht.
- Fig. 5: zeigt schematisch einen Vliesleger mit einer erfindungsgemäßen Walze in einer Seitenansicht.
- Fig. 6: zeigt schematisch eine Krempel mit einer erfindungsgemäßen Walze in einer Seitenansicht.

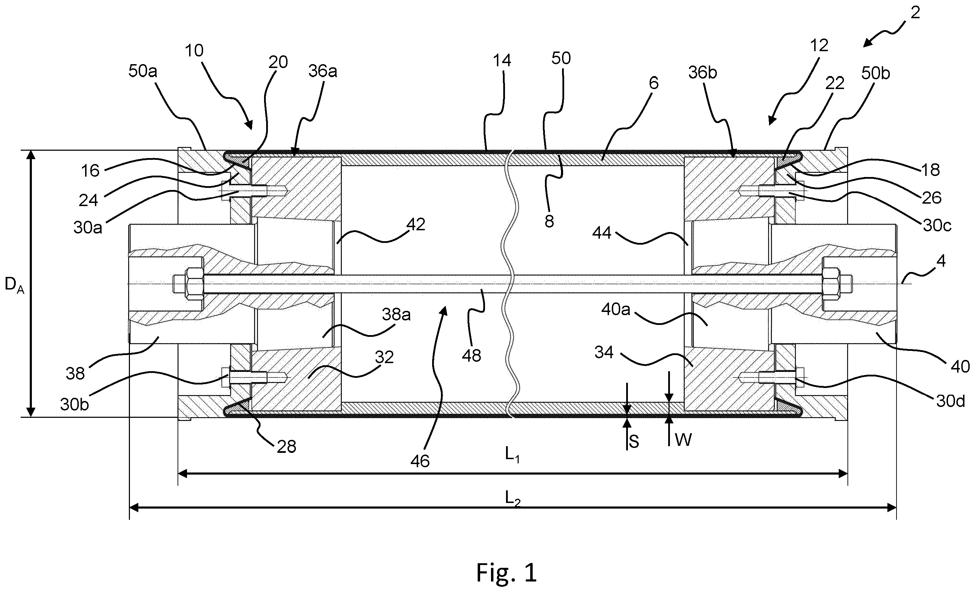

In Fig. 1 ist eine Ausführungsform einer erfindungsgemäßen Walze 2 in einer Querschnittsansicht entlang der Längsachse 4 der Walze 2 dargestellt. Die Walze 2 umfasst einen im Wesentlichen zylindrischen Walzengrundkörper 6, der bevorzugt als Hohlwelle ausgebildet ist. Dies muss nicht zwingend der Fall sein, es ist jedoch vorteilhaft, wenn der Walzengrundkörper 6 zumindest an seinen Enden rohrförmig ausgebildet ist. Der Walzengrundkörper 6 weist eine äußere erste Mantelfläche 8, einen ersten Endabschnitt 10 und einen zweiten Endabschnitt 12 auf. Der erste und der zweite Endabschnitt 10, 12 sind jeweils an einem Ende des Walzengrundkörpers 6 angeordnet und liegen einander in Längsrichtung gegenüber. Der Walzengrundkörper 6 weist eine Wandstärke W auf und ist vorzugsweise aus einem Metall, wie zum Beispiel Stahl oder Aluminium, oder einem Kunststoff gebildet.

Die Walze 2 umfasst ferner eine Deckschicht 14 aus einem Faserverbundwerkstoff, der vorzugsweise Kohlenstofffasern und ein Polyesterharz als Matrix umfasst sowie, unabhängig von den verwendeten Materialien, eine Schichtdicke S aufweist. Durch diesen Aufbau weist die Walze 2 bei geringer Masse eine große Biegesteifigkeit auf. Die Deckschicht 14 umgibt die erste Mantelfläche 8 in Umfangsrichtung des Walzengrundkörpers 6 vollständig und erstreckt sich auch in Längsrichtung des Walzengrundkörpers 6 bevorzugt vollständig entlang der ersten Mantelfläche 8. Dadurch ist die erste Mantelfläche 8 des Walzengrundkörpers 6 vollständig von der Deckschicht 14 bedeckt. Ein Außendurchmesser der Walze 2 ist durch das Bezugszeichen D_{A} gekennzeichnet.

Ein erster Randbereich 16 der Deckschicht 14 erstreckt sich über den ersten Endabschnitt 10 des Walzengrundkörpers 6 hinaus, ist nach innen umgelegt und bezüglich des Walzengrundkörpers 6 festgelegt. In der dargestellten Ausführungsform ist die Walze 2 symmetrisch aufgebaut und dadurch an beiden Enden analog ausgebildet. Dies muss jedoch nicht zwingend der Fall sein und die beiden Enden der Walze 2 können auch unterschiedlich ausgebildet sein, bevorzugt jedoch beide gemäß einer erfindungsgemäßen Ausführungsform.

Ein zweiter Randbereich 18 der Deckschicht 14 erstreckt sich hier über den zweiten Endabschnitt 12 des Walzengrundkörpers 6 hinaus, ist nach innen umgelegt und bezüglich des Walzengrundkörpers 6 festgelegt.

Allgemein im Rahmen der Erfindung umfasst der Faserverbundwerkstoff der Deckschicht 14 Fasern, die in Form eines Gewebes, eines Geleges oder in Form von Prepregs einlagig oder mehrlagig um den Walzengrundkörper 6 gewickelt und dann im ersten und im zweiten Endabschnitt 10, 12 nach innen, also in Richtung der Längsachse 4, umgelegt bzw. umgeschlagen sind.

Ein erster Teil von Fasern des Faserverbundwerkstoffs verläuft dabei im Wesentlichen in Umfangsrichtung des Walzengrundkörpers 6 und ein zweiter Teil von Fasern des Faserverbundwerkstoffs verläuft im Wesentlichen in Längsrichtung des Walzengrundkörpers 6. Dadurch, dass die Deckschicht 14 im ersten und im zweiten Endabschnitt 10, 12 umgelegt und bezüglich des Walzengrundkörpers 6 festgelegt ist, wirkt die Deckschicht 14 einer thermischen Ausdehnung des Walzengrundkörpers 6 sowohl in radialer Richtung als auch in Längsrichtung entgegen und eine Delamination der Deckschicht 14 vom Walzengrundkörper 6 kann vermieden werden.

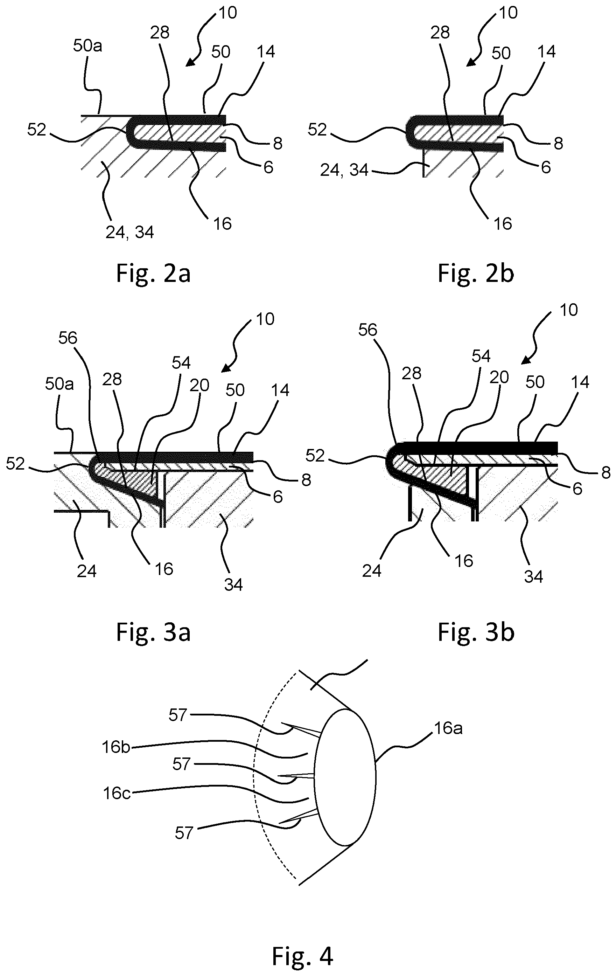

Um Scherspannungen in der Deckschicht 14 zu vermeiden, sind der erste und der zweite Randbereich 16, 18 um eine Krümmung nach innen umgelegt. In einer ersten Ausführungsform weist der Walzengrundkörper 6 im ersten und im zweiten Endabschnitt 10, 12 jeweils stirnseitig eine entsprechende Krümmung auf, wie unter Bezug auf Fig. 2a und 2b näher beschrieben. In einer zweiten Ausführungsform umfasst die Walze 2 zumindest einen ersten Endring 20 und vorzugsweise auch einen zweiten Endring 22, wie in Fig. 1 dargestellt und unter Bezug auf Fig. 3a und 3b näher beschrieben. Dann weisen der erste und der zweite Endring 20, 22 jeweils die Krümmung auf, um die die Randbereich 16, 18 umgelegt sind. Die nachfolgenden Ausführungen treffen sowohl auf die erste als auch auf die zweite Ausführungsform zu, sofern nicht anders beschrieben.

Die Deckschicht 14 kann sowohl im ersten und im zweiten Randbereich 16, 18 als auch im Bereich der ersten Mantelfläche 8 des Walzengrundkörpers 6 adhäsiv festgelegt sein. Hierzu kann das Harz des Faserverbundwerkstoffs der Deckschicht 14 und/oder ein separates Klebemittel verwendet werden. Zusätzlich oder alternativ kann die Deckschicht 14 im ersten Randbereich 16 und vorzugsweise auch im zweiten Randbereich 18 reibschlüssig festgelegt sein.

In der dargestellten Ausführungsform umfasst die Walze 2 ein erstes Klemmelement 24 und vorzugsweise ein zweites Klemmelement 26. Das erste Klemmelement 24 legt den ersten Randbereich 16 der Deckschicht 14 reibschlüssig fest und das zweite Klemmelement 26 legt den zweiten Randbereich 18 reibschlüssig fest. Das erste und das zweite Klemmelement 24, 26 drücken den ersten bzw. zweiten Randbereich 16, 18 gegen einen Befestigungsabschnitt 28 des Walzengrundkörpers 6 (siehe Fig. 2a, b) oder, wie hier, des ersten bzw. zweiten Endrings 20, 22 (siehe Fig. 3a, b). Vorzugsweise sind das erste und das zweite Klemmelement 24, 26 ring- oder scheibenförmig ausgebildet und koaxial zur Längsachse 4 des Walzengrundkörpers 6 angeordnet, bevorzugt jeweils an einem Ende der Walze 2. Sind der erste und der zweite Endabschnitt 10, 12 rohrförmig ausgebildet oder ist der Walzengrundkörper 6 als Hohlwelle ausgebildet, wie dargestellt, sind das erste und das zweite Klemmelement 24, 26 bevorzugt zumindest teilweise im ersten bzw. zweiten Endabschnitt 10, 12 des Walzengrundkörpers 6 aufgenommen.

Der Anpressdruck auf den ersten und den zweiten Randbereich 16, 18 kann eingestellt werden, indem das erste und das zweite Klemmelement 24, 26 in Längsrichtung des Walzengrundkörpers 6 verstellbar sind. Dies kann dadurch erreicht werden, dass das erste und das zweite Klemmelement 24, 26 mit einer weiteren Komponente der Walze 2 verschraubt sind, sodass mittels der Verschraubung der Anpressdruck veränderbar ist. Die Längsachsen der Schrauben 30a-d sind vorzugsweise parallel zur Längsachse 4 des Walzengrundkörpers 6 ausgerichtet und die Schrauben 30a-d jedes Klemmelements 24, 26 sind über den Umfang verteilt.

Im Allgemeinen kann die Walze 2 ferner einen ersten Walzenboden 32 und einen zweiten Walzenboden 34 aufweisen. Der erste und der zweite Walzenboden 32, 34 bilden jeweils einen Boden des im Wesentlichen zylindrischen Walzengrundkörpers 6, wobei der erste Walzenboden 32 im ersten Endabschnitt 10 und der zweite Walzenboden 34 im zweiten Endabschnitt 12 angeordnet ist. Das erste und das zweite Klemmelement 24, 26 können dann mit dem jeweiligen Walzenboden 32, 34 verschraubt sein, wie bereits beschrieben.

Der erste und der zweite Walzenboden 32, 34 können integral mit dem Walzengrundkörper 6 ausgebildet sein oder, wie dargestellt, als separate Elemente bereitgestellt werden. In diesem Fall sind der erste und der zweite Walzenboden 32, 34 im Wesentlichen ring- oder scheibenförmig, weisen also eine zylindrische Form auf, und sind koaxial zum Walzengrundkörper 6 angeordnet. Ein Außendurchmesser des ersten und des zweiten Walzenbodens 32, 34 entspricht im Wesentlichen dem Innendurchmesser des Walzengrundkörpers 6 im ersten und im zweiten Endabschnitt 10, 12. Der Walzengrundkörper 6 kann in beiden Endabschnitten 10, 12 jeweils einen Sitz 36a, b zur Aufnahme des jeweiligen Walzenbodens 32, 34 aufweisen. Jeder Sitz 36a, b umfasst eine innere Umfangsfläche des Walzengrundkörpers 6 im ersten bzw. zweiten Endabschnitt 10, 12 sowie eine Anschlagfläche, die den ersten und den zweiten Walzenboden 32, 34 in Längsrichtung des Walzengrundkörpers 6 positioniert. Die Anschlagfläche ist beispielsweise gebildet durch eine Stufe auf der Innenseite des Walzengrundkörpers 6, wobei der Walzengrundkörper 6 auf der dem jeweiligen Ende zugewandten Seite der Stufe einen größeren Innendurchmesser aufweist als auf der anderen Seite der Stufe.

Die Walze 2 kann weiterhin einen ersten Wellenzapfen 38 und einen zweiten Wellenzapfen 40 umfassen, die dazu eingerichtet sind, die Walze 2 drehend zu lagern. Hierzu sind der erste und der zweite Wellenzapfen 38, 40 koaxial zum Walzengrundkörper 6 angeordnet.

Der erste und der zweite Wellenzapfen 38, 40 können wiederum integral mit dem ersten bzw. zweiten Walzenboden 32, 34 oder als separate Elemente ausgebildet sein.

Als separate Elemente ausgebildete Wellenzapfen 38, 40 sind bezüglich des Walzengrundkörper 6 zu zentrieren, um den Rundlauf der Walze 2 zu gewährleisten. In der dargestellten Ausführungsform weisen der erste und der zweite Walzenboden 32, 34 jeweils in Längsrichtung des Walzengrundkörpers 6 eine Durchgangsöffnung 42, 44 auf, in der der erste bzw. der zweite Wellenzapfen 38, 40 gelagert ist. Die Durchgangsöffnungen 42, 44 sind konisch geformt und der erste und der zweite Wellenzapfen 38, 40 weisen jeweils ein korrespondierendes, konisch geformtes Ende 38a, 40a auf, das in der jeweiligen Durchgangsöffnung 42, 44 aufgenommen ist. Das erste und das zweite Klemmelement 24, 26 weisen ebenfalls eine Durchgangsöffnung auf, durch die der jeweilige Wellenzapfen 38, 40 hindurchtritt.

Einer (temperaturbedingten) Ausdehnung der Walze 2 bzw. des Walzengrundkörpers 6 kann weiter entgegengewirkt werden, indem der erste und der zweite Walzenboden 32, 34 in Längsrichtung des Walzengrundkörpers 6 mittels einer Spanneinrichtung 46 miteinander verspannt sind. Wie dargestellt, kann die Spanneinrichtung 46 einen Stab 48, beispielsweise aus Stahl, umfassen und koaxial zum Walzengrundkörper 6 angeordnet sein. Zum Spannen ist der Stab 48 in Längsrichtung jeweils außerhalb der Walzenböden 32, 34 gekontert. Hier erstreckt sich der Stab 48 durch den ersten Wellenzapfen 38, den ersten Walzenboden 32, den Walzengrundkörper 6, den zweiten Walzenboden 34 und den zweiten Wellenzapfen 40 koaxial zur Längsachse 4 und weist an seinen beiden Enden jeweils einen Gewindeabschnitt auf. Auf jeden dieser Gewindeabschnitte ist eine Mutter geschraubt, die am jeweiligen Wellenzapfen 38, 40 anliegt.

Wie in Fig. 1 zu sehen, weist die Walze 2 eine äußere Mantelfläche 50 auf, die zur besseren Unterscheidung von der ersten Mantelfläche 8 des Walzengrundkörpers 6 auch als zweite Mantelfläche 50 bezeichnet wird. Die zweite Mantelfläche 50 wird zum Großteil und in manchen Ausführungsformen vollständig durch die Deckschicht 14 gebildet. Beispielsweise erstreckt sich die Deckschicht 14 in Längsrichtung der Walze 2 über mindestens 80 % oder mindestens 90 % der Länge L₁ der zweiten Mantelfläche 50. Die Länge der gesamten Walze 2 ist als L₂ gekennzeichnet und hängt von der Länge der Wellenzapfen 38, 40 und somit von der Lagerung der Walze 2 in der jeweiligen Maschine ab. Für die vorliegende Betrachtung ist daher die Länge L₁ der zweiten Mantelfläche 50 von größerer Bedeutung.

Die zweite Mantelfläche 50 bildet die eigentliche Nutzfläche der Walze 2. Wird die Walze 2 z.B. als Umlenkwalze für ein Förderband, beispielsweise in einem Vliesleger, eingesetzt, bildet die zweite Mantelfläche 50 die Kontaktfläche zum Förderband. Wird die Walze 2 in einer Krempel verwendet, kann auf der zweiten Mantelfläche 50 eine Garnitur von Zähnen vorgesehen sein. Die Garnitur von Zähnen wird üblicherweise durch Umwickeln der Walze 2 mit einem Draht gebildet, der an den Walzenenden zu befestigen ist. In diesem Fall ist es daher vorteilhaft, wenn ein erster und ein zweiter Endbereich 50a, 50b der zweiten Mantelfläche 50 nicht durch die Deckschicht 14 gebildet sind. Vielmehr können der erste und der zweite Endbereich 50a, 50b durch das erste bzw. zweite Klemmelement 24, 26 oder den ersten bzw. zweiten Walzenboden 32, 34 gebildet werden.

In Fig. 2a, 2b, 3a, 3b ist jeweils eine Detailansicht des ersten Endabschnitts 10 unterschiedlicher Ausführungsformen der Walze 2 gezeigt. Alle Ausführungen hierzu treffen analog auf den zweiten Endabschnitt 12 zu.

Fig. 2a und 2b betreffen die erste Ausführungsform, bei der die Deckschicht 14 um den ersten Endabschnitt 10 des Walzengrundkörpers 6 selbst umgelegt ist, der die Krümmung 52 aufweist. Die Krümmung 52 verläuft von der ersten Mantelfläche 8 aus zunächst nach innen in Richtung der Längsachse 4 des Walzengrundkörpers 6 und bis zum Befestigungsabschnitt 28 des Walzengrundkörpers 6 für den ersten Randbereich 16. In der Querschnittsansicht ist der Befestigungsabschnitt 28 bevorzugt gerade ausgebildet und bezüglich der Längsachse 4 geneigt, sodass er eine im Wesentlichen konische Anlagefläche für den ersten Randbereich 16 der Deckschicht 14 bereitstellt und vorzugweise im Inneren des Walzengrundkörpers 6 angeordnet ist.

Im Ausführungsbeispiel nach Fig. 2a ist der erste Endbereich 50a der zweiten Mantelfläche 50 durch das erste Klemmelement 24 oder den ersten Walzenboden 34 gebildet, die bündig zur Deckschicht 14 angeordnet sind, sodass eine möglichst störungsfreie zweite Mantelfläche 50 gebildet wird. Das erste Klemmelement 24 bzw. der erste Walzenboden 34 können eine mit der Krümmung 52 korrespondierende Nut aufweisen, die an dem ungeschlagenen Teil Deckschicht 14 anliegt.

Im Ausführungsbeispiel nach Fig. 2b ist kein Endbereich 50a, b der zweiten Mantelfläche 50 neben der Deckschicht 14 vorgesehen. Die zweite Mantelfläche 50 wird vollständig durch die Deckschicht 14 gebildet. Das erste Klemmelement 24 bzw. der erste Walzenboden 32 sind zumindest teilweise und vorzugsweise vollständig im Walzengrundkörper 6 aufgenommen.

Fig. 3a und 3b betreffen die zweite Ausführungsform, bei der die Deckschicht 14 um den ersten Endring 20 umgelegt ist, der die Krümmung 52 aufweist. Der erste Endring 20 ist koaxial zum Walzengrundkörper 6 angeordnet und grenzt am ersten Endabschnitt 10 stirnseitig unmittelbar an den Walzengrundkörper 6 an. Der erste Endring 20 ist bündig zur ersten Mantelfläche 8, weist also einen Außendurchmesser auf, der dem Außendurchmesser des Walzengrundkörpers 6 bzw. der ersten Mantelfläche 8 entspricht.

In der dargestellten Ausführungsform weist der erste Endring 20 einen ersten Abschnitt 54 auf, der in den ersten Endabschnitt 10 des Walzengrundkörpers 6 eingesetzt ist, wobei ein Außendurchmesser des ersten Abschnitts 54 im Wesentlichen dem Innendurchmesser des Walzengrundkörpers 6 im ersten Endabschnitt 10 entspricht. An der Stirnseite des Walzengrundkörpers 6 erstreckt sich der erste Endring 20 radial nach außen zu einem Mantelabschnitt 56 des ersten Endrings 20, der bündig zur ersten Mantelfläche 8 des Walzengrundkörpers 6 angeordnet ist, also denselben Außendurchmesser wie diese aufweist. Vom Mantelabschnitt 56 erstreckt sich die Krümmung 52 bis zum Befestigungsabschnitt 28, der in der Querschnittsansicht bevorzugt gerade ausgebildet ist und bezüglich der Längsachse 4 des Walzengrundkörpers 6 geneigt, sodass er eine im Wesentlichen konische Anlagefläche für den ersten Randbereich 16 der Deckschicht 14 bereitstellt.

Im Ausführungsbeispiel nach Fig. 3a ist analog zum Ausführungsbeispiel nach Fig. 2a der erste Endbereich 50a der zweiten Mantelfläche 50 vorgesehen. Im Ausführungsbeispiel nach Fig. 3b ist analog zum Ausführungsbeispiel nach Fig. 2b kein Endbereich 50a, b der zweiten Mantelfläche 50 vorgesehen, sodass die zweite Mantelfläche 50 vollständig durch die Deckschicht 14 gebildet wird.

Fig. 4 zeigt schematisch den umgelegten ersten Randbereich 16 in einer perspektivischen Ansicht. Durch das Umlegen des ersten Randbereichs 16 ist ein im Wesentlichen umlaufender erster Rand 16a der Deckschicht 14 radial innerhalb der ersten Mantelfläche 8 angeordnet. Dadurch weist der erste Rand 16a einen geringeren Durchmesser und einen geringeren Umfang auf, als der auf der ersten Mantelfläche 8 angeordnete Teil der Deckschicht 14. Dies gilt analog für einen zweiten Rand der Deckschicht 14 im zweiten Randbereich 18. Um den ersten und gegebenenfalls auch den zweiten Randbereich 16, 18 zuverlässig zu klemmen, sollte der jeweilige Randbereich 16, 18 jedoch faltenfrei ausgebildet sein und keine Überlappungen des Deckschichtmaterials aufweisen.

Der erste Randbereich 16 und vorzugsweise auch der zweite Randbereich 18 können daher eine Mehrzahl von Einschnitten 57 aufweisen, die in Umfangsrichtung verteilt sind. Jeder Einschnitt 57 der Mehrzahl von Einschnitten 57 ist vom ersten Rand 16a bzw. vom zweiten Rand der Deckschicht 14 ausgehend derart ausgebildet, dass der jeweilige Randbereich 16, 18 faltenfrei und ohne Überlappungen nach innen umgelegt ist. Zwei Teilabschnitte 16b, 16c, die durch einen Einschnitt 57 voneinander getrennt sind, überlappen sich folglich nicht. Hierzu können die Einschnitte 57 vom jeweiligen Rand 16a ausgehend verjüngend geformt sein, beispielsweise im Wesentlichen dreieckig.

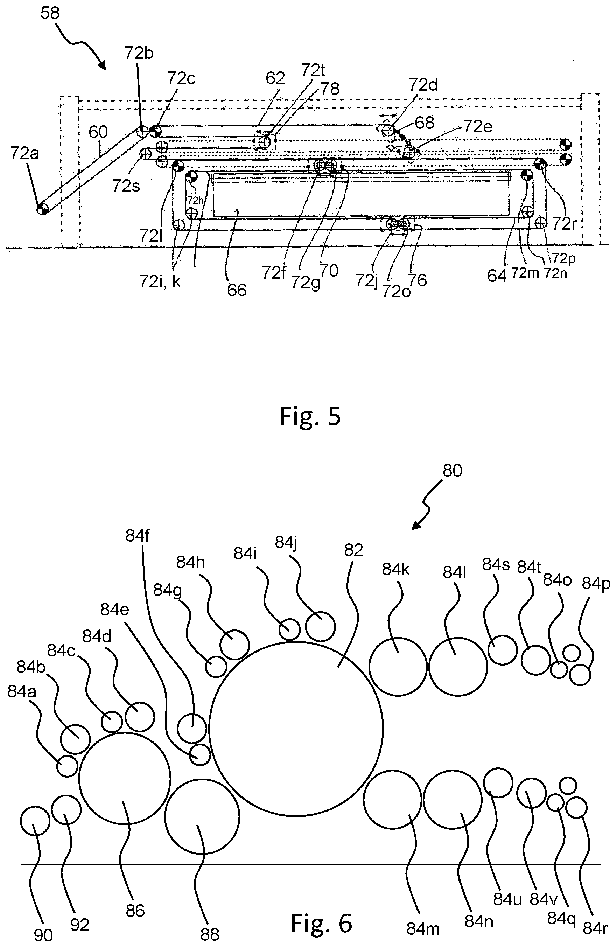

In Fig. 5 ist schematisch ein Vliesleger 58 in einer Seitenansicht dargestellt. Der Vliesleger 58 umfasst mindestens ein Förderband zum Fördern einer Faserflorbahn (nicht dargestellt), hier ein Zuführband 60, ein erstes Förderband 62, ein zweites Förderband 64 und ein Abzugsband 66. Ferner umfasst der Vliesleger 58 bevorzugt einen Oberwagen 68 und einen Legewagen 70. Das Zuführband 60 ist dazu eingerichtet, dem Vliesleger 58 eine von einer Krempel kommende Faserflorbahn zuzuführen und diese an das erste Förderband 62 zu übergeben. Das erste Förderband 62 fördert die Faserflorbahn zum Oberwagen 68, in dem die Faserflorbahn umgelenkt wird. Dann wird die Faserflorbahn vom ersten Förderband 62 an das zweite Förderband 64 übergeben. Das zweite Förderband 64 fördert die Faserflorbahn zum Legewagen 70. Der Legewagen 70 ist dazu eingerichtet, senkrecht zur Förderrichtung des Abzugsbands 66, die senkrecht zur Zeichenebene ausgerichtet ist, hin und her zu fahren und dabei die Faserflorbahn auf das Abzugsband 66 abzulegen.

Der Vliesleger 58 umfasst eine Mehrzahl von Umlenkwalzen 72a-t, um die das mindestens eine Förderband 60, 62, 64 geführt ist, wobei mindestens eine Umlenkwalze 72a-t der Mehrzahl von Umlenkwalzen 72a-t durch die Walze 2 gebildet ist, wie hierin beschrieben.

Alle Förderbänder 60, 62, 64 sind umlaufend ausgebildet und werden jeweils von zumindest einer der Umlenkwalzen angetrieben.

Genauer ist in der dargestellten Ausführungsform das Zuführband 60 um eine erste und um eine zweite Umlenkwalze 72a, 72b geführt. Benachbart zum Zuführband 60 läuft das erste Förderband 62 vorzugsweise um eine dritte Umlenkwalze 72c und von dort weiter bis zum Oberwagen 68, in dem das erste Förderband 62 um eine vierte und eine fünfte Umlenkwalzen 72d und 72e umgelenkt wird. Vorzugsweise führen sowohl das erste als auch das zweite Förderband 62, 64 vom Oberwagen 68 zum Legewagen 70. Es kann ein drittes Förderband 74 vorgesehen sein, das von der anderen Seite ebenfalls zum Legewagen 70 führt. Im Legewagen 70 sind das zweite und, falls vorhanden, das dritte Förderband 64, 74 oder alternativ das erste und das zweite Förderband 62, 64 um eine sechste Umlenkwalze 72f bzw. eine siebte Umlenkwalze 72g umgelegt, zwischen denen ein Legespalt zur Abgabe der Faserflorbahn auf das Abzugsband 66 gebildet ist. Vom Legewagen 70 führt das dritte Förderband 74 über mehrere Umlenkwalzen 72h-I zunächst über das Abzugsband 66 und zurück zum Legewagen 70, wobei eine achte Umlenkwalze 72j in einem ersten Hilfswagen 76 drehbar gelagert ist. Der erste Hilfswagen 76 ist zum Längenausgleich des zweiten und des dritten Förderbands 64, 74 vorgesehen und entgegengesetzt zum Legewagen 70 verfahrbar. Das zweite Förderband 64 führt vom Legewagen 70 zunächst über das Abzugsband 66 und über mehrere Umlenkwalzen 72m-r zurück zum Legewagen 70, wobei die eine neunte Umlenkwalze 72o ebenfalls im ersten Hilfswagen 76 drehbar gelagert ist. Das erste Förderband 62 verläuft vom Oberwagen 68 eine zehnte und eine elfte Umlenkwalze 72s, 72t zurück zum Zuführband 60, wobei die elfte Umlenkwalze 72t in einem zweiten Hilfswagen 78 drehbar gelagert ist. Der zweite Hilfswagen 78 ist zum Längenausgleich des ersten Förderbands 62 vorgesehen. Die erfindungsgemäße Walze ist auch in allen anderen bekannten Ausgestaltungen von Vlieslegern anwendbar.

In Fig. 6 ist eine Krempel 80 zum Erzeugen einer Florbahn bzw. eines Vorflors schematisch in einer Seitenansicht dargestellt. Die Krempel 80 ist insbesondere zum Erzeugen einer Faserflorbahn aus einer Faserflockenmatte eingerichtet. Hierzu umfasst die Krempel 80 einen Tambour 82, auch Hauptwalze genannte, sowie eine Mehrzahl von Eingriffswalzen 84a-v, 86, 88, 90, 92 die zum Eingriff mit Fasermaterial eingerichtet sind, dem Tambour 82 zugeordnet, vorgelagert oder nachgelagert sind und von denen zumindest eine Eingriffswalze durch eine erfindungsgemäße Walze 2 gebildet ist.

Die Mehrzahl von Eingriffswalzen 84a-v, 86, 88, 90, 92 der Krempel 80 kann beispielsweise einen Vorreißer 86 und eine Übertragungswalze 88 vor dem Tambour 82 sowie eine Einzugswalze 90 und eine Vorwalze 92 umfassen. Die Mehrzahl von Eingriffswalzen 84a-j kann eine Mehrzahl von Wender- und Arbeiterwalzen 84a-j umfassen, die jeweils paarweise entlang des Umfangs des Tambours 82 und/oder des Vorreißers 86 angeordnet sind. Die Mehrzahl von Eingriffswalzen 84k-n kann auch obere oder untere Wirrwalzen 84 k, m und/oder Abnehmerwalzen 84l, n umfassen, die nach dem Tambour 82 vorgesehen sind, oder diesen nachgeordnete obere und untere Abzugswalzen 84o-r. Schließlich kann die Mehrzahl von Eingriffswalzen zumindest eine obere und/oder untere Stauchwalze 84s-v umfassen. Zum Beispiel sind zwischen der oberen Abnehmerwalze 84l und der oberen Abzugswalze 84o eine erste und eine zweite obere Stauchwalze 84s, t vorgesehen. Zwischen der unteren Abnehmerwalze 84n und der unteren Abzugswalze 84q können ferner eine erste und eine zweite untere Stauchwalze 84u, v vorgesehen sein.

Weitere vorteilhafte Anwendungsbereiche der erfindungsgemäßen Walze 2 sind für den Fachmann basierend auf der Offenbarung der vorliegenden Erfindung ersichtlich.

## Patentansprüche

1. Walze (2), umfassend:
einen im Wesentlichen zylindrischen Walzengrundkörper (6) mit einer äußeren ersten Mantelfläche (8), einem ersten Endabschnitt (10) und einem zweiten Endabschnitt (12), der dem ersten Endabschnitt (10) in Längsrichtung des Walzengrundkörpers (6) gegenüberliegt; und
eine Deckschicht (14) aus einem Faserverbundwerkstoff;
wobei die Deckschicht (14) die erste Mantelfläche (8) des Walzengrundkörpers (6) in Umfangsrichtung des Walzengrundkörpers (6) vollständig umgibt;
wobei sich ein erster Randbereich (16) der Deckschicht (14) über den ersten Endabschnitt (10) des Walzengrundkörpers (6) hinaus erstreckt, nach innen umgelegt ist und bezüglich des Walzengrundkörpers (6) festgelegt ist; und
wobei die Walze (2) zumindest ein erstes Klemmelement (24) umfasst, das den ersten Randbereich (16) festlegt, wobei das erste Klemmelement (24) ring- oder scheibenförmig ausgebildet ist und koaxial zum Walzengrundkörper (6) angeordnet ist;
**dadurch gekennzeichnet, dass**
der erste Endabschnitt (10) des Walzengrundkörpers (6) stirnseitig eine von der ersten Mantelfläche (8) ausgehende Krümmung (52) aufweist, um die der erste Randbereich (16) der Deckschicht (14) nach innen umgelegt ist, und das erste Klemmelement (24) und der erste Endabschnitt (10) des Walzengrundkörpers (6) korrespondierende konische Anlageflächen aufweisen, zwischen denen der erste Randbereich (16) aufgenommen ist; oder dass
die Walze (2) weiterhin einen ersten Endring (20) umfasst, der koaxial zum Walzengrundkörper (6) angeordnet ist und am ersten Endabschnitt (10) an den Walzengrundkörper (6) angrenzt, wobei der erste Endring (20) bündig zur ersten Mantelfläche (8) ist und auf einer vom Walzengrundkörper (6) abgewandten Seite eine Krümmung (52) aufweist, um die der erste Randbereich (16) der Deckschicht (14) nach innen umgelegt ist, und das erste Klemmelement (24) und der erste Endring (20) korrespondierende konische Anlageflächen aufweisen, zwischen denen der erste Randbereich (16) aufgenommen ist.

2. Walze (2) nach Anspruch 1, **dadurch gekennzeichnet, dass** der erste Randbereich (16) adhäsiv und reibschlüssig festgelegt ist.

3. Walze (2) nach Anspruch 1 oder 2, **dadurch gekennzeichnet, dass** das erste Klemmelement (24) in Längsrichtung der Walze (2) derart verstellbar ist, dass ein mittels des ersten Klemmelements (24) auf den ersten Randbereich (16) der Deckschicht (14) wirkender Anpressdruck einstellbar ist.

4. Walze (2) nach einem der vorangehenden Ansprüche, **dadurch gekennzeichnet, dass** der Walzengrundkörper (6) zumindest im ersten Endabschnitt (10) rohrförmig ausgebildet ist und der erste Randbereich (16) im Inneren des ersten Endabschnitts (10) angeordnet ist.

5. Walze (2) nach Anspruch 4, **dadurch gekennzeichnet, dass** die Walze (2) einen ersten Walzenboden (32) und einen zweiten Walzenboden (34) umfasst, wobei der erste Walzenboden (32) im ersten Endabschnitt (10) des Walzengrundkörpers (6) aufgenommen ist und der zweite Walzenboden (34) im zweiten Endabschnitt (12) des Walzengrundkörpers (6) aufgenommen ist, wobei der erste und der zweite Walzenboden (32, 34) in Längsrichtung des Walzengrundkörpers (6) mittels einer Spanneinrichtung (46) miteinander verspannt sind.

6. Walze (2) nach einem der vorangehenden Ansprüche, **dadurch gekennzeichnet, dass** der erste Randbereich (16) der Deckschicht (14) eine Mehrzahl von Einschnitten (57) aufweist, die in Umfangsrichtung verteilt ist, wobei jeder Einschnitt (57) der Mehrzahl von Einschnitten (57) von einem in Umfangsrichtung verlaufenden Rand (16a) der Deckschicht (14) ausgehend derart ausgebildet ist, dass der erste Randbereich (16) faltenfrei ausgebildet ist und sich zwei Teilabschnitte (16b, 16c) des ersten Randbereichs (16), die durch einen Einschnitt (57) der Mehrzahl von Einschnitten (57) voneinander getrennt sind, nicht überlappen.

7. Walze (2) nach einem der vorangehenden Ansprüche, **dadurch gekennzeichnet, dass** die Walze (2) eine äußere zweite Mantelfläche (50) aufweist, die zumindest teilweise durch die Deckschicht (14) gebildet ist, wobei sich die Deckschicht (14) in Längsrichtung der Walze (2) über mindestens 50%, mehr bevorzugt über mindestens 70%, noch mehr bevorzugt über mindestens 80% der zweiten Mantelfläche (50) erstreckt.

8. Walze (2) nach einem der vorangehenden Ansprüche, **dadurch gekennzeichnet, dass** der Walzengrundkörper (6) aus Metall, insbesondere aus Aluminium oder Stahl, oder aus einem Kunststoff, insbesondere aus GFK (glasfaserverstärkter Kunststoff) oder Polyamid, gebildet ist und die Deckschicht (14) Kohlenstofffasern, Glasfasern oder Mineralfasern, wie Keramikfasern oder Silikatfasern, und eine Matrix aus Kunststoff, insbesondere aus Harzen aus Epoxy, Polyester, Polyurethan oder Melamin, umfasst.

9. Vliesleger (58) mit mindestens einem Förderband (60, 62, 64, 66, 74) zum Fördern einer Faserflorbahn und einer Mehrzahl von Umlenkwalzen (72a-t), um die das mindestens eine Förderband (60, 62, 64, 66, 74) geführt ist, wobei zumindest eine Umlenkwalze (72a-t) der Mehrzahl von Umlenkwalzen (72a-t) als eine Walze (2) nach einem der Ansprüche 1 bis 8 ausgebildet ist.

10. Krempel (80) zum Erzeugen einer Faserflorbahn umfassend einen Tambour (82) und eine Mehrzahl von Eingriffswalzen (84a-v), wobei jede Eingriffswalze (84a-v) der Mehrzahl von Eingriffswalzen (84a-v) zum Eingriff mit Fasermaterial eingerichtet ist und dem Tambour (82) zugeordnet, vorgelagert oder nachgelagert ist, wobei zumindest eine Eingriffswalze (84a-v) der Mehrzahl von Eingriffswalzen (84a-v) als eine Walze (2) nach einem der Ansprüche 1 bis 8 ausgebildet ist.

## Claims

1. A roller (2), comprising:
a substantially cylindrical roller main body (6) having an outer first lateral surface (8), a first end section (10) and a second end section (12), which lies opposite the first end section (10) in a longitudinal direction of the roller main body (6); and
a covering layer (14) made of a fibre composite material;
wherein the covering layer (14) completely surrounds the first lateral surface (8) of the roller main body (6) in a circumferential direction of the roller main body (6);
wherein a first edge region (16) of the covering layer (14) extends beyond the first end section (10) of the roller main body (6), is folded over inwards and is fixed in relation to the roller main body (6), and
wherein the roller (2) comprises at least one first clamping element (24), which fixes the first edge region (16), wherein the first clamping element (24) is annular or disc-shaped and is arranged coaxially with respect to the roller main body (6),
**characterized in that**
the first end section (10) of the roller main body (6) has, at an end, a curvature (52) which starts from the first lateral surface (8) and around which the first edge region (16) of the covering layer (14) is folded over inwards, and the first clamping element (24) and the first end section (10) of the roller main body (6) have corresponding conical contact surfaces, between which the first edge region (16) is accommodated, or **in that**
the roller (2) further comprises a first end ring (20), which is arranged coaxially with respect to the roller main body (6) and adjoins the roller main body (6) at the first end section (10), wherein the first end ring (20) is flush with the first lateral surface (8) and has, on a side facing away from the roller main body (6), a curvature (52) around which the first edge region (16) of the covering layer (14) is folded over inwards.

2. The roller (2) according to claim 1, **characterized in that** the first edge region (16) is fixed adhesively and frictionally.

3. The roller (2) according to claim 1 or 2, **characterized in that** the first clamping element (24) is adjustable in the longitudinal direction of the roller (2) to adjust a contact pressure acting on the first edge region (16) of the covering layer (14) by means of the first clamping element (24).

4. The roller (2) according to any of the preceding claims, **characterized in that** the roller main body (6) is of tubular shape at least in the first end section (10), and the first edge region (16) is arranged in an interior of the first end section (10).

5. The roller (2) according to claim 4, **characterized in that** the roller (2) comprises a first roller base (32) and a second roller base (34), wherein the first roller base (32) is accommodated in the first end section (10) of the roller main body (6), and the second roller base (34) is accommodated in the second end section (12) of the roller main body (6), wherein the first and the second roller bases (32, 34) are clamped together in the longitudinal direction of the roller main body (6) by means of a clamping device (46).

6. The roller (2) according to any of the preceding claims, **characterized in that** the first edge region (16) of the covering layer (14) has a plurality of notches (57) distributed in the circumferential direction, wherein each notch (57) of the plurality of notches (57) is formed in such a way, starting from an edge (16a) of the covering layer (14) which extends in the circumferential direction, that the first edge region (16) is formed without folds and two subsections (16b, 16c) of the first edge region (16), which are separated from one another by a notch (57) of the plurality of notches (57), do not overlap.

7. The roller (2) according to any of the preceding claims, **characterized in that** the roller (2) has an outer second lateral surface (50) which is formed at least partially by the covering layer (14), wherein the covering layer (14) extends in the longitudinal direction of the roller (2) over at least 50%, more preferably over at least 70%, even more preferably over at least 80%, of the second lateral surface (50).

8. The roller (2) according to any of the preceding claims, **characterized in that** the roller main body (6) is formed from metal, in particular aluminium or steel, or from a plastic, in particular GRP (glass-reinforced plastic) or polyamide, and the covering layer (14) comprises carbon fibres, glass fibres or mineral fibres, such as ceramic fibres or silicate fibres, and a matrix of plastic, in particular a matrix of resins of epoxy, polyester, polyurethane or melamine.

9. A crosslapper (58) having at least one conveyor belt (60, 62, 64, 66, 74) for conveying a fibrous web and a plurality of deflection rollers (72a-t), around which the at least one conveyor belt (60, 62, 64, 66, 74) is guided, wherein at least one deflection roller (72a-t) of the plurality of deflection rollers (72a-t) is configured as a roller (2) according to any of claims 1 to 8.

10. A carding machine (80) for producing a fibrous web, comprising a main cylinder (82) and a plurality of engagement rollers (84a-v), wherein each engagement roller (84a-v) of the plurality of engagement rollers (84a-v) is configured for engagement with fibre material and is associated with the main cylinder (82), adjacent thereto or upstream or downstream thereof, wherein at least one engagement roller (84a-v) of the plurality of engagement rollers (84a-v) is configured as a roller (2) according to any of claims 1 to 8.

## Revendications

1. Cylindre (2), comprenant :
un corps de base (6) de cylindre sensiblement cylindrique, doté d'une première surface enveloppante (8) extérieure, d'une première section d'extrémité (10) et d'une deuxième section d'extrémité (12), qui est placée au vis-à-vis de la première section d'extrémité (10) dans la direction longitudinale du corps de base (6) de cylindre ; et
une couche de couverture (14) en une matière composite fibreuse ;
la couche de couverture (14) entourant complètement la surface enveloppante (8) du corps de base (6) de cylindre dans la direction circonférentielle du corps de base (6) de cylindre ;
une première zone marginale (16) de la couche de couverture (14) s'étendant au-delà de la première section d'extrémité (10) du corps de base (6) de cylindre, étant repliée vers l'intérieur et étant immobilisée par rapport au corps de base (6) de cylindre et
le cylindre (2) comprenant au moins un premier élément de serrage (24), qui immobilise la première zone marginale (16), le premier élément de serrage (24) étant conçu en forme d'anneau ou de disque et étant placé de manière coaxiale par rapport au corps de base (6) de cylindre ;
**caractérisé en ce que**
la première section d'extrémité (10) du corps de base (6) de cylindre comporte sur la face frontale une courbure (52) partant de la première surface enveloppante (8), autour de laquelle la première zone marginale (16) de la couche de couverture (14) est repliée vers l'intérieur, et **en ce que** le premier élément de serrage (24) et la première section d'extrémité (10) du corps de base (6) de cylindre comportent des surfaces d'appui coniques correspondantes, entre lesquelles est réceptionnée la première zone marginale (16) ; ou **en ce que**
le cylindre (2) comprend par ailleurs une première bague d'extrémité (20), qui est placée de manière coaxiale par rapport au corps de base (6) de cylindre et qui est adjacente par la première section d'extrémité (10) au corps de base (6) de cylindre, la première bague d'extrémité (20) affleurant la première surface enveloppante (8) et sur une face opposée au corps de base (6) de cylindre, comportant une courbure (52), autour de laquelle la première zone marginale (16) de la couche de couverture (14) est repliée vers l'intérieur et **en ce que** le premier élément de serrage (24) et la première bague d'extrémité (20) comportent des surfaces d'appui coniques correspondantes, entre lesquelles est réceptionnée la première zone marginale (16).

2. Cylindre (2) selon la revendication 1, **caractérisé en ce que** la première zone marginale (16) est immobilisée par adhérence et par friction.

3. Cylindre (2) selon la revendication 1 ou 2, **caractérisé en ce que** le premier élément de serrage (24) est ajustable dans la direction longitudinale du cylindre (2), de telle sorte qu'une pression d'appui agissant au moyen du premier élément de serrage (24) sur la première zone marginale (16) de la couche de couverture (14) soit réglable.

4. Cylindre (2) selon l'une quelconque des revendications précédentes, caractérisé en ce en ce qu'au moins dans la première section d'extrémité (10), le corps de base (6) de cylindre est conçu de forme tubulaire et la première zone marginale (16) est placée à l'intérieur de la première section d'extrémité (10).

5. Cylindre (2) selon la revendication 4, **caractérisé en ce que** le cylindre (2) comprend un premier fond de cylindre (32) et un deuxième fond de cylindre (34), le premier fond de cylindre (32) étant réceptionné dans la première section d'extrémité (10) du corps de base (6) de cylindre et le deuxième fond de cylindre (34) étant réceptionné dans la deuxième section d'extrémité (12) du corps de base (6) de cylindre, le premier et le deuxième fonds de cylindre (32, 34) étant contraints l'un avec l'autre dans la direction longitudinale du corps de base (6) de cylindre au moyen d'un dispositif de tension (46).

6. Cylindre (2) selon l'une quelconque des revendications précédentes, **caractérisé en ce que** la première zone marginale (16) de la couche de couverture (14) comporte une pluralité d'entailles (57), qui sont distribuées dans la direction circonférentielle, en partant d'un bord (16a) s'écoulant dans la direction circonférentielle de la couche de couverture (14), chaque entaille (57) de la pluralité d'entailles (57) étant conçue de telle sorte que la première zone marginale (16) soit conçue sans plis et que deux sections partielles (16b, 16c) de la première zone marginale (16), qui sont séparées l'une de l'autre par une entaille (57) de la pluralité d'entailles (57) ne se chevauchent pas.

7. Cylindre (2) selon l'une quelconque des revendications précédentes, **caractérisé en ce que** le cylindre (2) comporte une deuxième surface enveloppante (50) extérieure, qui est constituée au moins en partie par la couche de couverture (14), la couche de couverture (14) s'étendant dans la direction longitudinale du cylindre (2) sur au moins 50 %, de manière plus préférentielle, sur au moins 70 %, de manière encore plus préférentielle, sur au moins 80 % de la deuxième surface enveloppante (50).

8. Cylindre (2) selon l'une quelconque des revendications précédentes, **caractérisé en ce que** le corps de base (6) de cylindre est conçu en métal, notamment en aluminium ou en acier ou en un matière plastique, notamment en GFK (matière plastique renforcée de fibres de verre) ou en polyamide et **en ce que** la couche de couverture (14) comprend des fibres de carbone, des fibres de verre ou des fibres minérales, telles que des fibres de céramique ou des fibres de silicate et une matrice en matière plastique, notamment en résines d'époxy, en polyester, en polyuréthane ou en mélamine.

9. Etaleur-nappeur (58), doté d'au moins bande de convoyage (60, 62, 64, 66, 74), destinée à convoyer une nappe de voile de carde et d'une pluralité de cylindres de renvoi (72a à t), autour desquels l'au moins une bande de convoyage (60, 62, 64, 66, 74) est guidée, au moins un cylindre de renvoi (72a à t) de la pluralité de cylindres de renvoi (72a à t) étant conçu sous la forme d'un cylindre (2) selon l'une quelconque des revendications 1 à 8.

10. Machine à carder (80), destinée à créer une nappe de voile de carde, comprenant un tambour (82) et une pluralité de cylindres de contact (84a à v), chaque cylindre de contact (84a à v) de la pluralité de cylindres de contact (84a à v) étant conçu pour entrer en contact avec une matière fibreuse et étant associé au tambour (82), placé en amont ou placé en aval de celui-ci, au moins un cylindre de contact (84a à v) de la pluralité de cylindres de contact (84a à v) étant conçu sous la forme d'un cylindre (2) selon l'une quelconque des revendications 1 à 8.
